Europäisches Patentamt

European Patent Office

Office européen des brevets

(11) Publication number: **0 322 697**
**A1**

## (12) EUROPEAN PATENT APPLICATION

(21) Application number: 88121212.0

(22) Date of filing: 19.12.88

(51) Int. Cl.4: **B29C 37/00** , **B29C 67/22** , **B29D 9/00** , //B29K105:04, **B29L31:50**

(30) Priority: 28.12.87 IT 4174287

(43) Date of publication of application:
05.07.89 Bulletin 89/27

(84) Designated Contracting States:
AT BE CH DE ES FR GB GR LI LU NL SE

(71) Applicant: TECNOFORM S.r.l.
Via Arsa, 18/A
I-31044 Montebelluna (Treviso)(IT)

(72) Inventor: Pozzobon, Erman
Via Montagna Grande 12
I-31044 Montebelluna (Treviso)(IT)

(74) Representative: Modiano, Guido et al
MODIANO, JOSIF, PISANTY & STAUB
Modiano & Associati Via Meravigli, 16
I-20123 Milan(IT)

(54) **Machine for manufacturing thermoformed articles.**

(57) The machine uses a foamed thermoplastic material in sheets or a foamed material coupled with a synthetic or natural fabric prepared so as to form a band (3) of adequate width. The band is moved step by step by a chain advancement system into a softening over (2) so as to heat it until it reaches its molding temperature. After this heating in the oven, the band is moved to a forming station (38) where it is shaped as required by molds (53,54). In a successive station (55) the thermoformed article is cut with a die-cutter (62) the blade whereof acts against a heated steel plate (63) so that the foamed thermoplastic material and the fabric coupled therewith are mutually heat-welded simultaneously with their die-cutting. Mechanical systems (48,64) for advancing the band, adjusting the closure of the molds and making die-cutters adhere to the heated abutment plane are provided in the two forming and die-cutting stations. The closure movement of the two forming and die-cutting stations with die-cutters occurs by means of toggle kinematisms (52,61).

Fig. 1

EP 0 322 697 A1

## MACHINE FOR MANUFACTURING THERMOFORMED ARTICLES

The present invention relates to a machine for manufacturing thermoformed articles in plastic material and more in particular insoles with an anatomical plantar insert perforated for aeration.

Considering the specific product consituted by a plantar insert, it is known that anatomic plantar inserts are used in many types of footwear and are inserted therein.

These plantar inserts are manufactured starting from a sheet of polyethylene-based foamed thermoplastic material coupled on one side with a synthetic and/or natural fabric.

According to the current production method, machines are known which thermoform one or more pairs of insoles or other articles starting from a standard-width band.

Insoles with an anatomical shape are usually formed only in the rear half portion of the insole's shape (the heel and pre-arch region), so that insoles of different sizes can subsequently be cut therefrom.

The band thus thermoformed is cut into rectangular segments each containing two or more imprint elements and is then moved on to a further treatment of perimetral cutting with die-cutters which produces the insole of the required size.

Clearly this kind of treatment is discontinuous and therefore entails a low production.

This arises from the fact that at least three different machines must be used, on which different workers operate in successive steps to obtain a finished product.

Another disadvantage of this production method resides in the fact that the insole is anatomically shaped only in its rear half, since the front half is left free in order to produce cuts for different sizes.

The shape and the cut can only be optimum for a single particular shoe size for which the mold was made, whereas for different shoe sizes the shape is naturally only approximately anatomical, since only the die-cutting profile is changed.

This method is scarcely convenient also because considerable amount of raw material are wasted, due to the fact that the thermoforming size (band and mold) is in any case chosen larger than required, since plantar inserts and insoles of smaller sizes are to be subsequently obtained therefrom.

The aim of the present invention is to provide a machine which produces thermoformed articles, and more in particular anatomical insoles, with a high production yield and therefore with modest costs.

A consequent primary object is to provide a machine which continuously produces finished products starting from a band or raw material of appropriate dimensions.

Another object is to provide a machine which manufactures plantar inserts which are always perfectly shaped for every shoe size and dimension.

A further object is to provide a machine which maximally uses the initial raw material without excessive waste or loss.

This aim, these objects and others which will become apparent hereinafter are achieved by a machine for manufacturing thermoformed articles, particularly insoles, characterized in that it comprises three sections, a first heating station constituted by a tunnel oven having means for advancing the band of raw material, a second forming station constituted by at least one forming mold actuated by a vertical toggle press, and a third station comprising a die-cutter acting against a heated plate, said die-cutter being also actuated by a vertical toggle press, means to advance the band synchronously with the operation of said press and adjustment and positioning means for said presses.

Further characteristics and advantages of the invention will become apparent from the detailed description of a preferred embodiment, given only by way of non-limitative example and illustrated in the accompanying drawings, wherein:

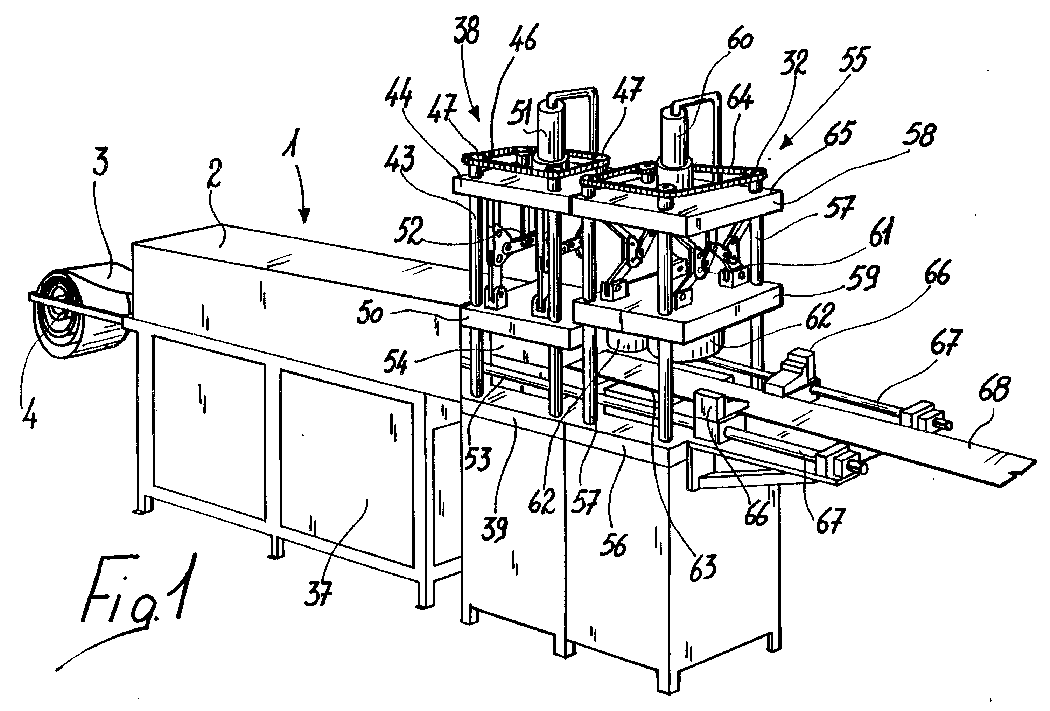

figure 1 is a general isometric view of the machine;

figure 2 is a schematic isometric view of the means for advancing the band inside the preheating oven;

figure 3 is a transverse sectional view of the oven, illustrating its component parts;

figure 4 is a plan view of the oven;

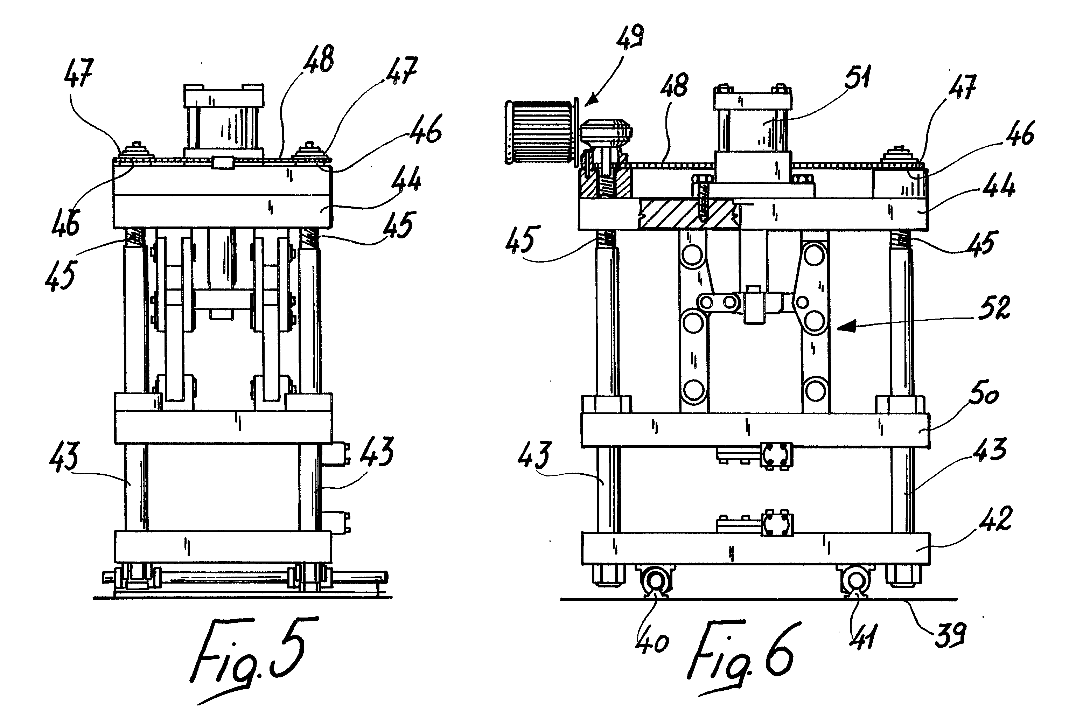

figure 5 is a lateral view of a press assembly;

figure 6 is a front view of the press illustrated in figure 5;

figure 7 is a planar view of a suggested arragement of cutting and forming a plantar inserts on a band;

figure 8 is a view of a plantar insert manufactured with the machine according to the present invention.

With reference to the above described figures, the machine is composed of a first station 1 substantially constituted by a tunnel oven 2 in which a band 3 of polyethylene foam coupled with a fabric is passed, said band polyethylene foam coupled with a fabric is passed, said band being unwound from a reel 4 on which it is wound after having been previously cut from a band of commercial size.

The width of the band 3 is chosen appropriately according to the type of product to be manufactured.

The oven 2 is preferably heated with electric lamps 5 of the infrared-ray type arranged both above and below the advancement line of the band 3 as illustrated in figure 3.

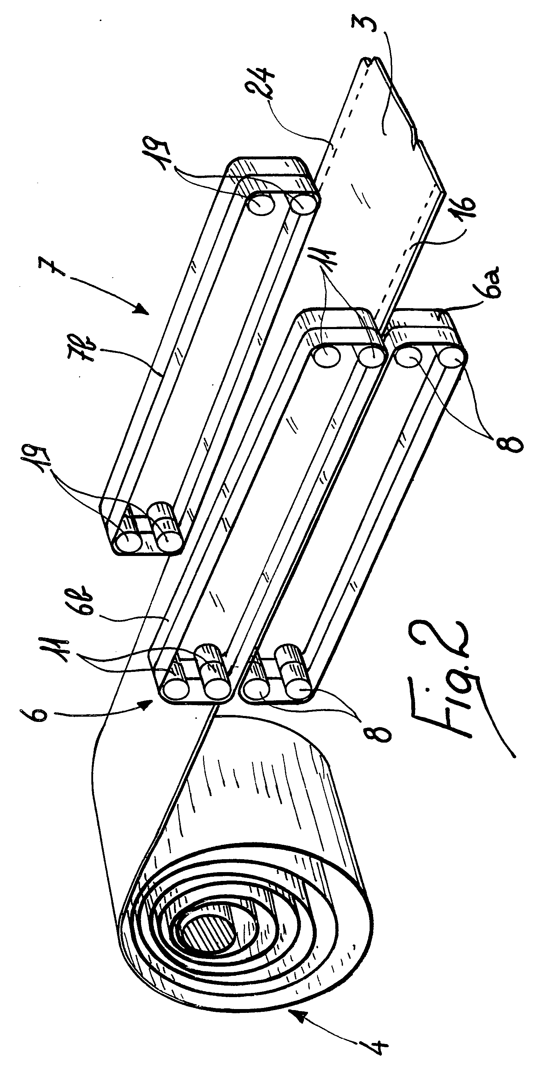

In order to allow the uniform and step by step advancement of the band 3 two pairs of double chains are provided inside the oven 2: a first pair and a second pair respectively indicated by the reference numerals 6 and 7 in figure 2.

In the pair 6, the lower chain 6a is supported by rollers (or toothed pinions) such as 8 which are pivoted on brackets 9 rigidly associated with a first side wall 10.

The corresponding upper chain 6b is supported by rollers (or toothed pinions) such as 11 pivoted to a horizontal plate 12 supported by the stems 13 of a pair of pistons 14 (only one whereof is visible in figure 3); the cylindrical body 15 of said pistons is rigidly associated with the side wall 10.

The actuation of the piston 14 respectively moves the two chains 6a and 6b further apart or closer practically until they make contact with one another.

This allows respectively to insert the edge 16 of the band 3 and to subsequently keep it pressed and advanced it.

Similarly, in the pair 7 the lower chain 7a is supported by rollers (or toothed pinions) associated with brackets 17 rigidly associated with a second side wall 18.

The corresponding upper chain 7b is supported by rollers (or toothed pinions) such as 19 pivoted to a horizontal plate 20 supported by the stems 21 of a pair of pistons 22 the cylindrical body whereof 23 is rigidly associated with the side wall 18.

The actuation of the pistons 22, which occurs simultaneously with that of the pistons 14, respectively moves the two chains 7a and 7b further apart or closer practically until they make contact with one another.

This allows respectively to insert the second edge 24 of the band 3 and to subsequently keep it pressed and advance it.

The two pairs of chains 6 and 7 are concordantly actuated by a single motor 25 with a reducer 26 which rotates a single transverse grooved axis 27 which engages at least one of the rollers which support the lower chain 6a and 7a which in turn also transmit the motion to the upper chains 6b and 7b.

Skids support the chains in the intermediate regions between the rollers (or the toothed pinions) so as to ensure the grip on the tape for the entire length of said chains.

Each of the two side walls 10 and 18 is downwardly provided with at least one pair of internally threaded sleeves 28 and 19; one of said inner threads is right-handed and the other is left-handed, and said sleeves are both inserted on a horizontal shaft 30 having two respectively right-handed and left-handed female threads at the regions affected by the sleeves 28 and 29.

The shaft 30 has a central support 31 which fixes its position and allows it only to rotate; said rotation is performed by means of a handwheel 32.

The rotation of the shaft 30 and of the corresponding identical shaft 33 causes the parallel and symmetrical movement of the two walls 10 and 18 with respect to the centerline of the oven, consequently adjusting the mutual distance of the pairs of chains 6 and 7 to adapt them to the width chosen for the band 3.

The entire structure of the pairs of chains 6 and 7 is supported on a base 34 on which the entire oven rests; said base is mounted on two rails 35 and 36 rigidly associated with the frame-casing 37.

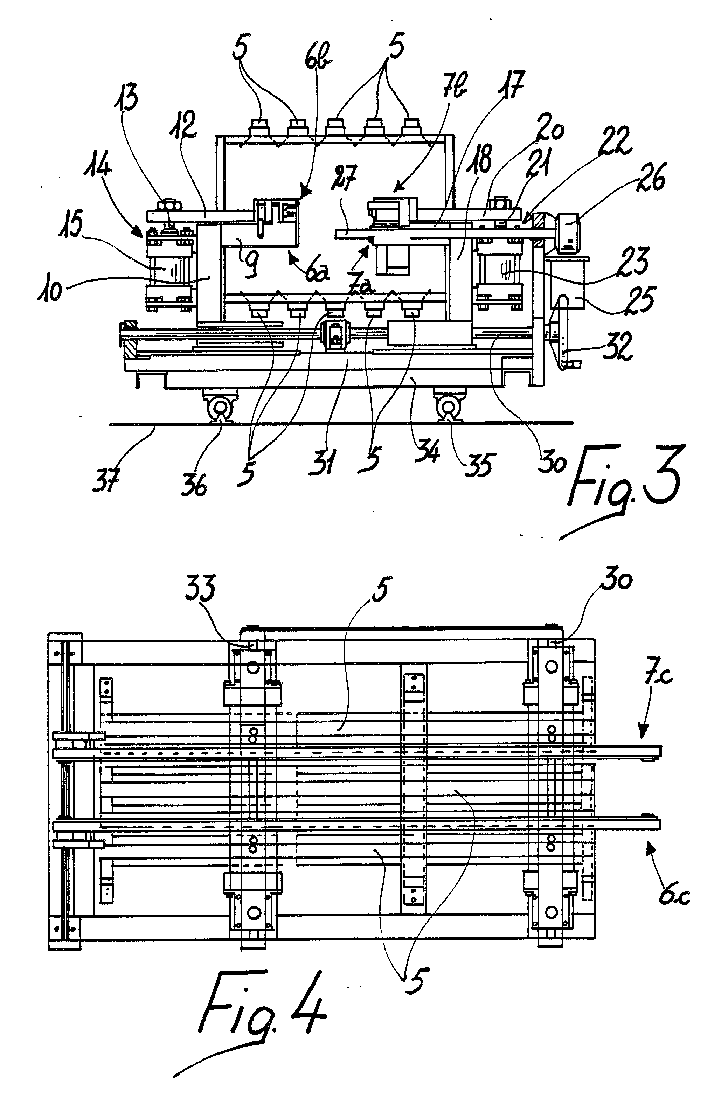

The front part of the pairs of chains 6 and 7, respectively indicated by 6c and 7c in figure 4, protrudes forwards with respect to the base 34 to follow the band 3 up to the forming and die-cutting molds which will be described hereinafter.

The possibility of moving on the rails 35 and 36 allows to move the entire oven 1 backwards when this is necessary to replace the forming molds and the die-cutters.

After said first feeding and heating station the machine has a second forming station indicated by 38 and composed of a frame 39 on which a base 42 is fixed; four vertical guiding columns 43 extend from said base and are upwardly associated with an adjustably positioned plate 44.

The upper ends 45 of said guiding columns 43 are threaded, while the upper plate 44 has internally threaded sleeves 46 at the passage of the columns 43; each of said sleeves has a toothed pinion 47.

The pinions 47 are connected by a single chain 48 which is moved by a motor 49 fitted with a reducer.

The columns 43 furthermore constitute the guides for a movable mold-holder plate 50 moved by a piston 51 and a toggle kinematism 52.

The lower forming half-mold 53 is fixed on said base 42 and interacts with the upper half-mold 54 fixed on the movable mold-holder 50.

The combination of the toggle kinematism 52 with the system for positioning the upper plate 44 allows to perfectly adjust the two forming half-molds 53 and 54.

In order to reduce production times, the two half-molds 53 and 54 are cooled by circulating a refrigerating fluid conditioned by a known refrigerating assembly not illustrated in the figure.

Said forming station 38 is followed by a die-cutting and perforation station 55 constituted by a large base plate 56 mounted on two longitudinal rails 40 and 41 rigidly associated with the frame 39; four guiding columns 57 extend vertically from said plate 56 and are upwardly connected by a horizontal plate 58; said columns also guide the movement of a die-cutter supporting plate 59 which is moved by an oleodynamic piston 60 which acts on a toggle kinematism 61 interposed between the upper plate 58 and the die-cutter supporting plate 59.

The die-cutters 62 are fixed on said plate 59 and act against a planar support 63 rigidly associated with the plate 56.

In this case, too, an adjustment system is provided which is constituted by a chain 64 moved by a motor 64a which engages with threaded sleeves 65 provided on the upper plate 58 and engaged on the threaded ends of the columns 57, thus allowing to exactly locate the die-cutters 62 against the support 63.

In order to perform a perfect, burr-free cut, besides perfectly positioning the die-cutters 62 with respect to the rest 63, said supporting plane 63 is heated so as to simultaneously melt the cut flap.

To advance the band 3 step by step in the two forming and cutting stations, as an alternative to the already described chains, it is possible to provide a pair of pneumatic clamps 66 mounted on two horizontal cylindrical rods 67 arranged side by side parallel to the forming and cutting molds.

Said clamps 66, actuated by means of pneumatic pistons, grip the edge of the band and advance it step by step onto a base plane 68 until the product is unloaded.

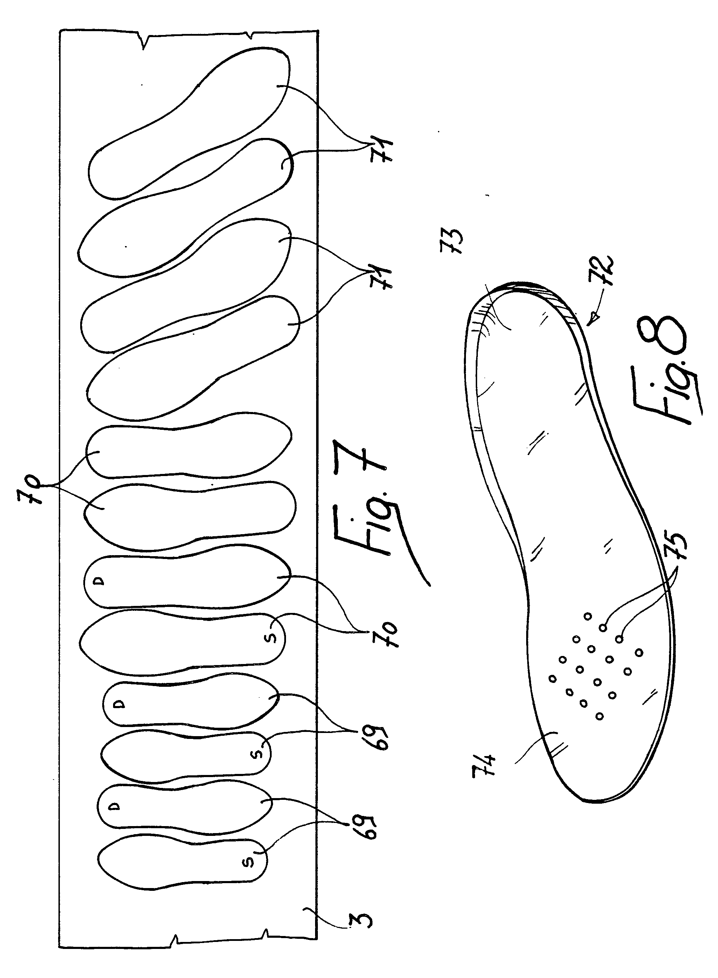

If anatomical insoles are to be manufactured, the forming molds and the die cutters are arranged appropriately in order to allow the maximum and best possible utilization of the band 3 according to the dimensions of the insoles, as illustrated in figure 7.

The die-cutters are positioned according to the position of the forming molds by positioning the entire station, which as mentioned can move on rails.

The band 3 is chosen with an appropriate width so that insole shapes such as those indicated by 69 and 70 in figure 7 can be die-cut on it.

Said left and right shapes of the same shoe size are arranged with their middle axis perpendicular to the longitudinal axis of the band, since their length is shorter than the maximum usable width of the band in the case of the shapes 69 or equal thereto in the case of the shapes 70.

If the shapes to be obtained are instead wider than the useful width of the band 3, such as those indicated by 71 in figure 7, said shapes are arranged so as to always alternate a right one with a left one, with their middle axes inclined with respect to the longitudinal axis of the band so that they are in any case tangent to the ideal lines which indicate the useful width of said band.

Naturally this arrangement is non-limitative and the shapes may also be arranged with their axes parallel to the axis of the band.

The product thus obtained is of the type indicated by 72 in figure 8, having a rear portion 73 shaped anatomically like the front portion 74, which preferably also has aeration holes 75.

From what has been described and illustrated it can be seen that the intended aim and objects have all been achieved, and in particular that a machine has been provided which produces anatomically shaped plantar inserts or other thermoformed articles in an industrially simple and economically advantageous manner.

In particular the fact is stressed that all the forming and cutting operations are performed in a single machine starting from a band of material, finally obtaining a finished product requiring no further treatment.

The invention provides a high-quality product both because the forming is performed with molds which are in each instance related to a single insole size and because the combined effect of die-cutting on a heated support produces a perfect, burr-free cut.

Naturally, the embodiments of the machine may be different and the components may be chosen in any way according to the requirements starting from the same inventive concept.

The materials and dimensions may thus by any, according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Machine for manufacturing thermoformed articles, particularly insoles, characterized in that it comprises three sections, a first heating station (1) constituted by a tunnel oven (2) having means (6,7) for advancing the band (3) of raw material, a second forming station (38) consituted by at least one forming mold (54) actuated by a vertical toggle press, and a third station (55) comprising a die-cutter (62) acting against a heated plate (63), said die-cutter being also actuated by a vertical toggle press (51,52,60,61), means (27) to advance the band synchronously with the operation of said press (51,52) and adjustment and positioning means (43,48,57,64) for said presses.

2. Machine, according to claim 1, characterized in that said tunnel oven comprises electronic infrared lamps (5), the edges of said band (3) being gripped, in said oven, between two double chains (6,7) which press them and advance them synchronously with respect to the operating times of said presses (51,52,60,61).

3. Machine, according to claim 1, characterized in that said chains (6,7) gripping said band edges are mounted on adjustable supports (12,20) so as to adapt the distance of said chains to the width of said band (3) inserted therebetween.

4. Machine, according to claim 1, characterized in that said tunnel oven is mounted on guides (5) so as to be movable away from said stations to allow the easy replacement of the molds and die-cutters.

5. Machine, according to claim 1, characterized in that the forming molds (53,54) are cooled with a fluid conditioned by a refrigerating assembly.

6. Machine, according to claim 1, characterized in that said third station (55) comprises a pair of die-cutters (62) rigidly associated with plate (59) which is vertically movable by means of a toggle actuation (61), said die-cutters acting on an abutment plate (63), said plate (63) being kept at a temperature sufficient to obtain the heat-welding of the edge cut by said die-cutters.

7. Machine, according to claim 1, characterized in that said press of said die-cutting station (55) is mounted on longitudinal rails (40,41) which allow to position it with respect to the forming station (38).

8. Machine, according to claim 1, characterized in that said forming and die-cutting stations (38,55) comprise band advancement means constituted by a pair of pneumatic clamps (66) acting on the edge of the band (3), said clamps being mounted on two horizontal cylindrical bars (67) and being moved by pneumatic pistons.

9. Machine, characterized in that said die-cutting station (55) has molds with punches of die-cutters adapted to produce a plurality of holes (75) in the case of plantar inserts for footwear, said holes being provided for ventilating said insole (72).

Fig. 1

Fig.2

EP 0 322 697 A1

Fig. 3

Fig. 4

Fig.5

Fig.6

EP 0 322 697 A1

Fig. 7

Fig. 8

EP 0 322 697 A1

# EUROPEAN SEARCH REPORT

European Patent Office

. Application number

| | DOCUMENTS CONSIDERED TO BE RELEVANT | | | EP 88121212.0 |

| Category | Citation of document with indication, where appropriate, of relevant passages | Relevant to claim | CLASSIFICATION OF THE APPLICATION (Int. Cl.4) |
|---|---|---|---|
| A | DE - A1 - 2 648 155 (KIEFEL) <br> * Totality * <br> -- | 1,2 | B 29 C 37/00 <br> B 29 C 67/22 <br> B 29 D 9/00// |
| A | DE - A - 1 914 148 (PORTA) <br> * Totality * <br> -- | 1 | //B 29 K 105:04 <br> B 29 L 31:50 |
| A | FR - A - 2 096 624 (TRAVAINI) <br> * Totality * <br> -- | | |
| A | US - A - 1 942 398 (FOWLER) <br> * Totality * <br> ---- | | |

**TECHNICAL FIELDS SEARCHED (Int. Cl.4)**

B 29 C
B 29 D

The present search report has been drawn up for all claims

| Place of search | Date of completion of the search | Examiner |
|---|---|---|
| VIENNA | 28-02-1989 | MAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82